# EUROPÄISCHE PATENTSCHRIFT

(11) **EP 1 357 625 B1**
(45) Veröffentlichungstag und Bekanntmachung des Hinweises auf die Patenterteilung: **09.02.2011**
(21) Anmeldenummer: 03008227.5
(22) Anmeldetag: 09.04.2003
(51) Int. Cl.: H01M 8/06, H01M 8/04, B64D 41/00, B64D 13/06

(54) **Verfahren zur Effizienzsteigerung und Verminderung von Abgasen bei Brennstoffzellensytemen**
Process to increase efficiency and decrease the exhaust gases from fuel cell system
Procédé pour augmenter l'efficacité et diminuer les gaz d'échappement d'un système de piles à combustible

(30) Priorität: 13.04.2002 DE 10216361
(43) Veröffentlichungstag der Anmeldung: 29.10.2003
(73) Patentinhaber: Airbus Deutschland GmbH, 21129 Hamburg (DE)
(72) Erfinder: Hoffjann, Claus, 21629 Neu-Wulmstorf (DE); Heinrich, Hans-Jürgen, 22609 Hamburg (DE)
(74) Vertreter: Hansmann, Dierk

(56) Entgegenhaltungen:
- WO-A1-01/03223
- DE-A1- 19 821 952
- DE-A1- 19 904 711
- JP-A- 2002 070 580
- US-A1- 2004 043 276

## Beschreibung

Die Erfindung betrifft ein Verfahren zur Effizienzsteigerung und zur Verminderung von Abgasen bei Brennstoffzellensystemen, insbesondere für die Energieerzeugung sowie für Wassergenerierungssysteme auf Brennstoffzellen-Basis.

Für den Betrieb von Brennstoffzellen werden im Allgemeinen zwei gasförmig vorliegende Ausgangsstoffe benötigt: Wasserstoff (H₂) anodenseitig und Sauerstoff (O₂) kathodenseitig.
Diese Gase können, je nach Brennstoffzellentyp, entweder als reine Gase in molekularer Form vorliegen, Bestandteil von Gasgemischen sein oder in sogenannten Reformerprozessen aus anderen chemischen Verbindungen (z.B. Wasserstoff aus Kohlenwasserstoffen) gewonnen werden.
In verschiedenen Anwendungsfällen, wie z.B. für den mobilen Einsatz, wird der von der Brennstoffzelle benötigte Sauerstoffanteil aus der Umgebungsluft gewonnen, die in einem Mischungsverhältnis von ca. 18% Sauerstoff (O₂), 78% Stickstoff (N₂) und 4% anderen Gasen (CO₂ und Spurengase) vorliegt. Dies bedeutet, das ca. 82% der Sauerstoffseitig durch die Brennstoffzelle geleiteten Gase für den Reaktionsprozess nicht nutzbar sind. Im Falle von Hochtemperatur-Brennstoffzellen, die bei Temperaturen von ca. 600°C bis 1000°C arbeiten, kommt es zudem zu unerwünschten thermochemischen Reaktionen, wie beispielsweise der Bildung von Stickoxiden NO_{X}.
Bei der Verwendung von Kohlenwasserstoffen, z.B. aus Mineralöl, zur Gewinnung von Wasserstoff (H₂) für die Brennstoffzelle, entstehen ebenfalls im Reformerprozess Gase, die für die Brennstoffzelle nicht nutzbar sind und als Abgase anfallen (CO, CO2, C_{X}H_{Y}).

In der DE 198 21 952 C2 ist eine Energieversorgungseinheit an Bord eines Luftfahrzeugs beschrieben, und zwar zur Substitution eines Haupttriebwerksgenerators, einer sogenannten Auxiliary Power Unit, einer Ram Air Turbine oder einer NiCd-Batterie. Es ist eine Brennstoffzelle zur Erzeugung von Gleichstrom vorgesehen, wobei zur Luftversorgung der Brennstoffzelle Abluft der Luftfahrzeug-Klima-anlage oder Luftfahrzeugaussenluft eingesetzt wird. Aus der Brennstoffzellenabluft wird Wasser für die Wasserversorgung des Luftfahrzeuges gewonnen, wobei die Brennstoffzellenabluft anschliessend an die Luftfahrzeugumgebung abgeführt wird. Aus der Brennstoffzelle austretender Wasserstoff wird auch an die Luftfahrzeugumgebung abgeführt.

Weiterhin ist aus der DE 199 11 018 C1 ein Hilfstriebwerk für ein Luftfahrzeug - einer sogenannten Auxiliary Power Unit - bekannt, welches eine Gasturbine mit einer Brennkammer, einen Verdichter sowie eine Turbine umfasst. Zur Erzeugung von Druckluft dient ein mit der Turbine gekoppelter Kompressor, während zur Erzeugung elektrischer Energie eine Brennstoffzelle vorhanden ist.

In der GB 2 338 750 A ist Strahltriebwerk mit einer integralen Brennstoffzelle beschrieben. Dieser Druckschrift ist - ebenso wenig wie den beiden vorher beschriebenen Druckschriften - kein Reduktionsverfahren zu entnehmen, bei dem neben der Reduzierung des Gehaltes von CO und/oder NOx im Abgas einer Hochtemperatur-Brennstoffzelle der darin enthaltene Wasserstoff zur weiteren Verwertung Niedertemperatur-Brennstoffzellen (PEM-Brennstoffzellen) als Brennstoff zugeführt wird.

DE 198 21 952 A1 offenbart eine Energieversorgungseinheit an Bord eines Luftfahrzeugs, die als Energiewandler eine Brennstoffzelle zur Erzeugung von Gleichstrom umfasst.

Der Erfindung liegt nun die Aufgabe zugrunde, ein Verfahren zur Effizienzsteigerung von mit Luft und Kohlenwasserstoffen (bzw. Wasserstoff) betriebenen Brennstoffzellen anzugeben und damit gleichzeitig ein Verfahren vorzuschlagen, das es erlaubt, die bei Brennstoffzellen, vorzugsweise bei Hochtemperatur-Brennstoffzellen anfallenden unerwünschten Abgase zu reduzieren und somit den Einsatz in Luftfahrzeugen zu ermöglichen.

Die Aufgabe wird erfindungsgemäß durch die kennzeichnenden Verfahrensmerkmale von Anspruch 1 gelöst.

Das erfindungsgemäße Verfahren beruht auf der Anreicherung der für die Brennstoffzelle nutzbaren Gase bei gleichzeitiger Reduzierung aller anderen nicht am Prozess beteiligten Gase bzw. der Vermeidung unerwünschter chemothermischen Umwandlung. Hierbei erfolgt eine Gliederung in zwei Bereiche, und zwar in den Bereich der Sauerstoffanreicherung bzw. der Brennstoffanreicherung.

Erfindungsgemäße Ausgestaltungen des Verfahrens sind in den Unteransprüchen 2 bis 18 beschrieben.

In der Zeichnung ist ein Ausführungsbeispiel nach der Erfindung beschrieben, und zwar zeigt:

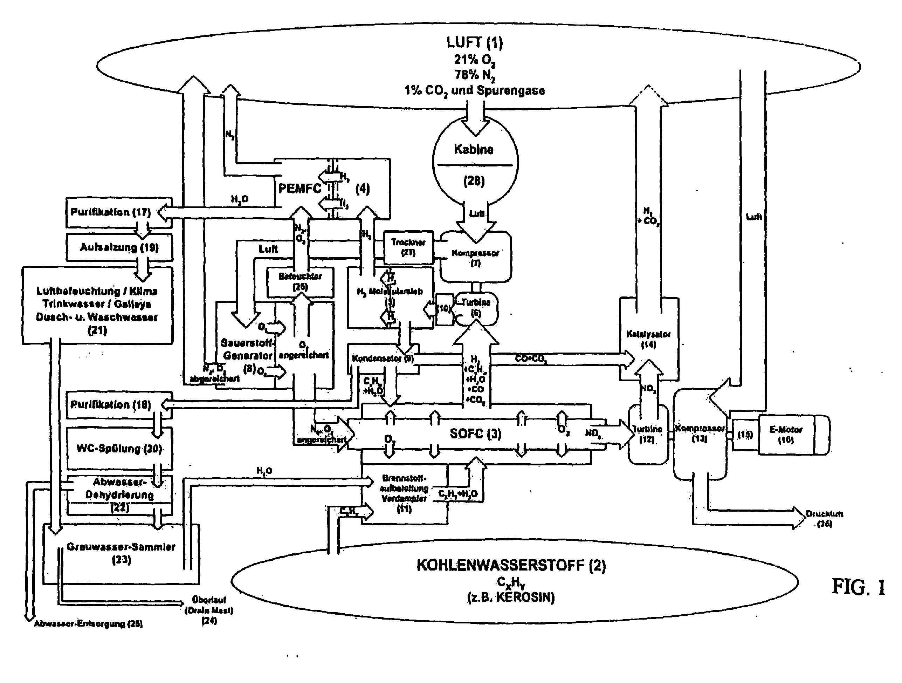

**Fig. 1****:** eine Sauerstoff- und Wasserstoffanreicherung für ein kombiniertes Brennstoffzellensystem aus
   PEMFC-Niedrigtemperatur- und SOFC-Hochtemperatur-Brennstoffzelle zur Wassergenerie
   rung in einem Luftfahrzeug, und

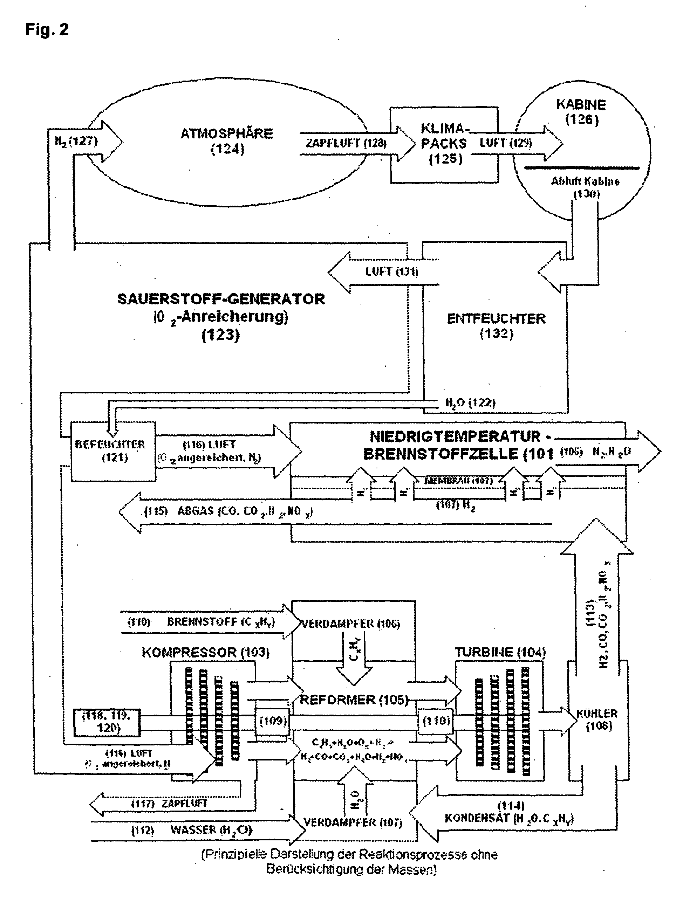

**Fig. 2****:** eine Sauerstoffanreicherung für ein Brennstoffzellensystem mit Niedrigtemperatur-Brennstoffzelle für Luftfahrzeuge.

### Sauerstoffanreicherung

Zur Sauerstoffanreicherung lassen sich unterschiedliche Verfahren anwenden. Üblicherweise lässt sich das Gas mit den geometrisch kleineren Molekülen durch ein sogenanntes Molekularsieb von den grösseren Molekülen der anderen vorhandenen Gase trennen. Im vorliegenden Fall sind die Moleküle des Sauerstoffs geometrisch kleiner als die des Stickstoffes und des Kohlendioxids in der Luft, so dass der Sauerstoff durch das Molekularsieb dringt, Stickstoff und Kohlendioxid jedoch nicht. Auf der abgewandten Seite des Siebes entsteht somit eine Sauerstoffanreicherung.

Bekannt sind Verfahren aus der Luftfahrt bei denen mittels zweier, sich in einem Behälter gegenüberliegender Molekularsiebe und einem wechselseitigen Betrieb der Durchströmrichtung innerhalb dieses Behälters eine Anreicherung von Sauerstoff zur Sauerstoffversorgung von Passagieren vorgenommen wird (OBOGS). Auch Verfahren auf keramischer Grundlage und unter Einfluss elektrostatischer Ladungen sind bekannt.
Unabhängig vom Sauerstoff-Anreicherungsverfahren besteht die Neuerung des Systems in der Verbindung eines dieser Verfahren oder einer Kombination dieser Verfahren mit einer oder mehreren Brennstoffzellen.
Hierzu wird das System zuführseitig druckbeaufschlagt und Luft durch ein Sauerstoff-Anreicherungssystem (z.B. einem Molekularsieb) gedrückt wobei Stickstoff- und Kohlendioxidmoleküle zurückgehalten werden. Die sauerstoffangereicherte Luft hinter dem Anreicherungssystem wird direkt der Brennstoffzelle zugeführt.
In der Brennstoffzelle selbst verbindet sich der Sauerstoff mit Wasserstoffatomen zu H₂O - Wasser. Dieses Wasser wird abgeschieden und kann anderweitigen Nutzungen wie z. B. einem Brennstoff-Reformerprozess und/oder einem Wassersystem zugeführt werden. Da nicht der gesamte enthaltene Sauerstoff durch die Brennstoffzelle genutzt wird, d.h. dass die mengenmässige Durchströmung höher ist als der tatsächliche Verbrauch, wird der Restsauerstoff eingangsseitig wieder dem Anreicherungssystem zugeführt. Die Druckbeaufschlagung des Anreicherungssystems und der Brennstoffzelle wird mittels eines Kompressors realisiert, der entweder mit elektrischer Energie aus der Brennstoffzelle betrieben wird oder, bei Verwendung einer Hochtemperatur-Brennstoffzelle, mittels der aus einer Abgas-Turbine gewonnenen mechanischen Energie.

### Brennstoffanreicherung

Bei den Verfahren zur Brennstoffanreicherung aus Kohlenwasserstoffen muss man in der Anordnung zwischen Hochtemperatur- und Niedrigtemperatur-Brennstoffzellen unterscheiden. In beiden Fällen wird in einem Reformerprozess Wasserstoff durch die Aufspaltung von Kohlenwasserstoff- und Wassermolekülen gewonnen. Hierbei entstehen neben atomarem- und molekularem Wasserstoff auch verschiedene weitere Reaktionsgase, die in der Brennstoffzelle keine Verwendung finden.
Findet bei Hochtemperatur-Brennstoffzellen der Reformerprozess intern statt, bei welchem eine Wasserstoffanreicherung innerhalb der Brennstoffzelle selbst erfolgt, so muss der Niedrigtemperatur-Brennstoffzelle ein externer Reformer vorgeschaltet werden. Der interne Reformerprozess von Hochtemperatur-Brennstoffzellen soll hier keine Berücksichtigung finden, da er für diesen Brennstoffzellentyp verfahrenstypisch ist.
Niedrigtemperatur Brennstoffzellen sind in der Regel äusserst empfindlich gegen Verunreinigungen des Brenngases, so dass eine vorherige Anreicherung des Brenngases mit Wasserstoff und damit eine prozentuale Herabsetzung der Verunreinigungen geboten ist.

Erfindungsgemäss werden hierbei die in einem Reformer erzeugten Reaktionsgase durch ein Molekularsieb getrennt. Im Reformerprozess entstehen aus Kohlenwasserstoffen (C_{X}H_{Y}) und Wasser (H₂O) die Reaktionsgase Wasserstoff (H₂), Kohlenmonoxid (CO), Kohlendioxid (CO₂) und Wasserdampf (H₂O). Das für die Niedrigtemperatur-Brennstoffzelle (z.B. PEMFC - Protonenaustauschmembran Brennstoffzelle) nutzbare Gas ist der Wasserstoff. Dieser wird mit einem Verfahren, analog zu denen auf der Sauerstoffseite, über ein Molekularsieb abgeschieden bzw. vor der Membran der Brennstoffzelle angereichert. Die anderen Gase werden in einen weiteren den Reformerprozess geführt, wo sie weiter aufgespalten werden und erneut Wasserstoff gewonnen wird, bevor sie als Abgas abgeführt werden.

### Besonderer Anwendungsfall Wassergenerierungssysteme

Ein besonderer Anwendungsfall sind Wassergenerierungssysteme auf der Basis von Brennstoffzellen.
Das zu erzeugende Wasser soll einen möglichst hohen Reinheitsgrad aufweisen und insbesondere frei sein von Kohlenwasserstoffen, Alkoholen etc. wie auch anderen potentiell gesundheitsgefährdenden Inhaltsstoffen.

Bei der Verwendung von Hochtemperatur-Brennstoffzellen fällt das nutzbare Wasser anodenseitig an, d.h. auf der Seite der Brennstoffzufuhr. Bei Kohlenwasserstoffen als Brenngas kommt es bei der Kondensation von Wasserdampf aus dem Brennstoffzellenabgas zu einer Vermischung von Wasser und Kohlenwasserstoffmolekülen, eventuell auch Russpartikeln und anderen gesundheitsschädlichen Inhaltsstoffen. Bei Niedrigtemperatur-Brennstoffzellen wird das Wasser auf der Sauerstoff- bzw. Luftseite erzeugt und besitzt dadurch von vornherein einen weit höheren Reinheitsgrad. Jedoch ist bei mobilen Anwendungen, wie z.B. in der Luftfahrt, aus Effizienzgründen ein Hochtemperatur-

Brennstoffzellensystem wie z.B. Oxidkeramik-Brennstoffzellen, kombiniert mit Gasturbinen (SOFC+GT) wünschenswert. Beim in Hochtemperatur-Brennstoffzellen intern stattfindenden Reformerprozess kann genügend Wasserstoff abgespalten werden um einerseits die Hochtemperatur-Brennstoffzelle selbst, wie auch zusätzliche Niedrigtemperatur-Brennstoffzellen zu versorgen.
Erfindungsgemäss wird das Verfahren zur Brennstoffanreicherung (H₂-Anreicherung) zwischen die Brennstoffseite der Hochtemperatur-Brennstoffzelle und die Brennstoffseite (Wasserstoffseite) der Niedrigtemperatur-Brennstoffzelle geschaltet.
Da die Niedrigtemperatur-Brennstoffzelle, insbesondere die Membran der Brennstoffzelle, empfindlich gegenüber thermischer Belastung ist, muss das Brenngas (H2) auf dem Weg von Hochtemperatur- zu Niedrigtemperatur-Brennstoffzelle abgekühlt werden. Hierfür kann beispielsweise eine Turbine mit nachgeschaltetem Kühler eingesetzt werden.

## Patentansprüche

1. Verfahren zur Effizienzsteigerung und Verminderung von Abgasen bei Brennstoffzellensystemen, insbesondere für die Energieerzeugung sowie für Wassergenerierungssysteme auf Brennstoffzellen-Basis, **dadurch gekennzeichnet, dass** bei Brennstoffzellensystemen mit einer Hochtemperatur-Brennstoffzelle (3) und einer oder mehreren Niedrigtemperatur-Brennstoffzellen (4, 101), denen im Betrieb kathodenseitig Luft (O₂) (1, 124) und anodenseitig Kohlenwasserstoff (C_{X}H_{Y}) (2) zugeführt werden, der Sauerstoffanteil der zugeführten Luft und der Wasserstoffanteil des Brenngases durch Anreicherung, unter jeweiliger Verwendung eines Gasanreicherungsverfahrens, erhöht wird, dass bei einem anodenseitigen Anreicherungsverfahren (H₂-Seite) eine Reformierung von Kohlenwasserstoffen durch einen internen Reformerprozess, bei dem gewonnener Wasserstoff auf t < 80 °C gekühlt (10, 108) und über ein Molekularsieb (5) abgetrennt und einer oder mehreren Niedrigtemperatur-Brennstoffzellen (4, 101) zugeführt wird, der Hochtemperatur-Brennstoffzelle (3) durchgeführt wird, deren Reaktionsgase (H₂, CᵥH_{w}, H₂O, CO, CO₂) getrennt werden und unterschiedlich weiterverwendet werden, dergestalt, dass der Wasserstoff (H₂) einer oder mehreren Niedrigtemperatur-Brennstoffzellen (4) zugeführt wird, Wasser (H₂O) (9, 114) und Kohlenwasserstoffe (CᵥH_{w}) auskondensiert (9, 114) werden und in den Reformerprozess zurückgeführt werden sowie Kohlendioxid (CO₂) und Kohlenmonoxid (CO) von der Hochtemperatur-Brennstoffzelle (3) einem Abgaskatalysator (14) zugeführt werden, und dass diese Gase in Kohlendioxid (CO₂) und molekularen Stickstoff (N₂) gewandelt und an die Atmosphäre / Luft (1) abgegeben werden.

2. Verfahren nach Anspruch 1, **dadurch gekennzeichnet, dass** durch den internen Reformerprozess der Hochtemperatur-Brennstoffzelle (3) Wasserstoff gewonnen wird.

3. Verfahren nach Anspruch 1 oder 2, **dadurch gekennzeichnet, dass** die Abkühlung über die Entspannung in einer oder mehreren Turbinen (6, 104) mit einer oder mehreren Turbinenstufen durchgeführt wird.

4. Verfahren nach Anspruch 1, **dadurch gekennzeichnet, dass** die einer Niedrigtemperatur-Brennstoffzelle (4, 101) zugeführte Luft der Temperatur des Wasserstoffs **dadurch** angeglichen wird, dass komprimierte Luft aus dem Sauerstoff-Anreicherungsverfahren auf t < 80 °C abgekühlt wird.

5. Verfahren nach Anspruch 1 oder 4, **dadurch gekennzeichnet, dass** die Abkühlung über die Entspannung in einer oder mehreren Turbinen mit einer oder mehreren Turbinenstufen durchgeführt wird.

6. Verfahren nach Anspruch 1, 3 oder 5, **dadurch gekennzeichnet, dass** zur Abkühlung ein Wärmetauscher nachgeschaltet wird, der z. B. mit Aussenluft als Kühlmedium betrieben wird.

7. Verfahren und Anordnung nach Anspruch 1, **dadurch gekennzeichnet, dass** ein Reformer (105) für die Erzeugung von Wasserstoff verwendet wird, dem ein Molekularsieb und ein Wasserstoff-Pufferbehälter (107) nachgeschaltet wird, wobei Molekularsieb und Pufferbehälter getrennt integriert werden.

8. Verfahren nach Anspruch 1, **dadurch gekennzeichnet, dass** das System kathodenseitig druckbeaufschlagt wird, wobei in Luftfahrzeugen in Flughöhe auch der Differenzdruck zwischen Aussenluft (1, 124) und Kabinenluft (28, 125) als Druckbeaufschlagung verwendet wird.

9. Verfahren nach Anspruch 1, **dadurch gekennzeichnet, dass** das System anodenseitig druckbeaufschlagt wird.

10. Verfahren nach Anspruch 1 oder 2, **dadurch gekennzeichnet, dass** aus der Hochtemperatur-Brennstoffzelle (3) anodenseitig und/oder der Niedrigtemperaturbrennstoffzelle (4, 101) kathodenseitig Wasser (H₂O) gewonnen und abgeführt wird.

11. Verfahren nach Anspruch 1, 2 oder 10, **dadurch gekennzeichnet, dass** das gewonnene Wasser der Niedrigtemperatur-Brennstoffzelle (4, 101) ganz oder teilweise für die Nutzung als Trinkwasser aufbereitet wird (17, 19, 21), und dass das gewonnene Wasser der Hochtemperatur-Brennstoffzelle (3) als Brauchwasser (WC-Spülung) (18, 20) verwendet wird.

12. Verfahren nach Anspruch 1, 2 oder 10, **dadurch gekennzeichnet, dass** das gewonnene Wasser der Niedrigtemperatur-Brennstoffzelle (4, 101) ganz oder teilweise für die Luftbefeuchtung in einer Klimaanlage (21) verwendet wird.

13. Verfahren nach Anspruch 1, 2 oder 10, **dadurch gekennzeichnet, dass** generiertes Wasser aus Hochtemperatur- und Niedrigtemperatur-Brennstoffzelle (3, 4, 101) getrennt zwischengespeichert wird.

14. Verfahren nach Anspruch 1, 2, 10 oder 13, **dadurch gekennzeichnet, dass** der Füllstand des in den Zwischenspeichern enthaltenen Wassers von einer Steuerungseinheit erfasst wird.

15. Verfahren nach Anspruch 1, 10 oder 11, **dadurch gekennzeichnet, dass** anfallendes Grauwasser (23) zu einer Nutzung im Reformerprozess (3, 11) rückgeführt wird und überschüssige Wassermengen drainiert werden (24).

16. Verfahren nach Anspruch 1 oder 11, **dadurch gekennzeichnet, dass** anfallendes Schwarzwasser (22, 23) teildehydriert und gereinigt wird, dass das so gewonnene Wasser dem Reformerprozess (3, 11) zugeführt wird, dort Wasserstoff generiert wird und dass überschüssige Wassermengen drainiert werden (24).

## Claims

1. Process for increasing efficiency and reducing waste gases in fuel cell systems, particularly for energy generation and also for water-generating systems based on fuel cells, **characterised in that**, in fuel cell systems having a high-temperature fuel cell (3) and one or more low-temperature fuel cells (4, 101) to which, during operation, air (O₂) is fed on the cathode side (1, 124) and hydrocarbon (C_{X}H_{Y}) is fed on the anode side (2), the oxygen content of the air fed in and the hydrogen content of the fuel gas is increased by enrichment, with the relevant use of a gas enrichment process; that, in an enrichment process on the anode side (H₂ side), a reforming of hydrocarbons is carried out by an internal reformer process - in which recovered hydrogen is cooled to t < 80°C (10, 108) and separated off via a molecular sieve (5) and fed to one or more low-temperature fuel cells (4, 101) - of the high-temperature fuel cell (3) whose reaction gases (H₂, CᵥH_{w}, H₂O, CO, CO₂) are separated and reused differently, such that the hydrogen (H₂) is fed to one or more low-temperature fuel cells (4), water (H₂O) (9, 114) and hydrocarbons (CᵥH_{w}) are condensed out (9, 114) and fed back into the reformer process and carbon dioxide (CO₂) and carbon monoxide (CO) are fed from the high-temperature fuel cell (3) to a waste gas catalytic converter (14); and that these gases are converted into carbon dioxide (CO₂) and molecular nitrogen (N₂) and given off to the atmosphere/air (1).

2. Process according to claim 1, **characterised in that** hydrogen is recovered by the internal reformer process of the high-temperature fuel cell (3).

3. Process according to claim 1 or 2, **characterised in that** the cooling operation is carried out via expansion in one or more turbines (6, 104) with one or more turbine stages.

4. Process according to claim 1, **characterised in that** the air fed to a low-temperature fuel cell (4, 101) is adjusted to the temperature of the hydrogen through the fact that compressed air from the oxygen enrichment process is cooled to t < 80°C.

5. Process according to claim 1 or 4, **characterised in that** the cooling operation is carried out via expansion in one or more turbines with one or more turbine stages.

6. Process according to claim 1, 3 or 5, **characterised in that** a heat exchanger, which is operated, for example, with outside air as the coolant, is connected downstream for cooling purposes.

7. Process and arrangement according to claim 1, **characterised in that** use is made, for generating hydrogen, of a reformer (105), downstream of which a molecular sieve and a hydrogen buffer tank (107) are connected, said molecular sieve and buffer tank being integrated separately.

8. Process according to claim 1, **characterised in that** the system is pressurised on the cathode side, the differential pressure between the outside air (1, 124) and the cabin air (28, 125) even being used as pressurisation in aircraft at flight altitude.

9. Process according to claim 1, **characterised in that** the system is pressurised on the anode side.

10. Process according to claim 1 or 2, **characterised in that** water (H₂O) is recovered and discharged from the high-temperature fuel cell (3) on the anode side and/or the low-temperature fuel cell (4, 101) on the cathode side.

11. Process according to claim 1, 2 or 10, **characterised in that** the recovered water of the low-temperature fuel cell (4, 101) is treated, in its entirety or in part, for use as drinking water (17, 19, 21), and that the recovered water of the high-temperature fuel cell (3) is used as service water (flushing WC's) (18, 20).

12. Process according to claim 1, 2 or 10, **characterised in that** the recovered water of the low-temperature fuel cell (4, 101) is used, in its entirety or in part, for air humidification in an air-conditioning installation (21).

13. Process according to claim 1, 2 or 10, **characterised in that** generated water from the high-temperature and low-temperature fuel cells (3, 4, 101) is subjected to intermediate storage separately.

14. Process according to claim 1, 2, 10 or 13, **characterised in that** the level of the water contained in the intermediate reservoirs is detected by a control unit.

15. Process according to claim 1, 10 or 11, **characterised in that** grey water (23) that is obtained is recycled for use in the reformer process (3, 11) and surplus quantities of water are drained off (24).

16. Process according to claim 1 or 11, **characterised in that** black water (22, 23) that is obtained is partly dehydrogenated and cleaned, that the water thus recovered is fed to the reformer process (3, 11), where hydrogen is generated, and that surplus quantities of water are drained off (24).

## Revendications

1. Procédé pour augmenter l'efficacité et réduire les gaz d'échappement dans les systèmes de piles à combustible, en particulier pour la production d'énergie ainsi que pour les systèmes de production d'eau basés sur des piles à combustible, **caractérisé en ce que** dans les systèmes de piles à combustible comportant une pile à combustible haute température (3) et une ou plusieurs pile(s) à combustible basse température (4, 101) auxquelles sont amenés, en fonctionnement, de l'air (O₂) (1, 124) côté cathode et un hydrocarbure (CₓH_{y}) (2) côté anode, la proportion d'oxygène de l'air amené et la proportion d'hydrogène du gaz combustible sont augmentées par enrichissement au moyen d'un procédé d'enrichissement de gaz respectif, **en ce que** dans un procédé d'enrichissement côté anode (côté H₂), un reformage d'hydrocarbures par un processus de reformage interne, dans lequel de l'hydrogène obtenu est refroidi à t < 80 °C (10, 108), séparé par un tamis moléculaire (5) et amené à une ou plusieurs pile(s) à combustible basse température (4, 101), est réalisé dans la pile à combustible haute température (3), dont les gaz de réaction (H₂, CᵥH_{w}, H₂O, CO, CO₂) sont séparés et réutilisés différemment, en ce sens que l'hydrogène (H₂) est amené à une ou plusieurs pile (s) à combustible basse température (4), l'eau (H₂O) (9, 114) et les hydrocarbures (CᵥH_{w}) sont condensés (9, 114) et réintroduits dans le processus de reformage, et le dioxyde de carbone (CO₂) et le monoxyde de carbone (CO) de la pile à combustible haute température (3) sont amenés à un catalyseur de gaz d'échappement (14), **en ce que** ces gaz sont transformés en dioxyde de carbone (CO₂) et en azote moléculaire (N₂) et sont rejetés dans l'atmosphère / l'air (1).

2. Procédé selon la revendication 1, **caractérisé en ce que** de l'hydrogène est obtenu par le processus de reformage interne de la pile à combustible haute température (3).

3. Procédé selon la revendication 1 ou 2, **caractérisé en ce que** le refroidissement est réalisé par la détente dans une ou plusieurs turbine(s) (6, 104) à un ou plusieurs étage(s) de turbine.

4. Procédé selon la revendication 1, **caractérisé en ce que** l'air amené à une pile à combustible basse température (4, 101) est ajusté à la température de l'hydrogène en refroidissant à t < 80°C de l'air comprimé provenant du procédé d'enrichissement en oxygène.

5. Procédé selon la revendication 1 ou 4, **caractérisé en ce que** le refroidissement est réalisé par la détente dans une ou plusieurs turbine(s) à un ou plusieurs étage(s) de turbine.

6. Procédé selon la revendication 1, 3 ou 5, **caractérisé en ce qu'**un échangeur de chaleur, utilisant par exemple de l'air extérieur comme milieu réfrigérant, est disposé en aval pour le refroidissement.

7. Procédé et dispositif selon la revendication 1, **caractérisé en ce que** l'on utilise pour la production d'hydrogène un reformeur (105), en aval duquel sont disposés un tamis moléculaire et un réservoir tampon d'hydrogène (107), le tamis moléculaire et le réservoir tampon étant intégrés séparément.

8. Procédé selon la revendication 1, **caractérisé en ce que** le système est mis en pression côté cathode, la différence de pression entre air extérieur (1, 124) et air de la cabine (28, 125) étant aussi utilisée pour la mise en pression dans des avions à l'altitude de vol.

9. Procédé selon la revendication 1, **caractérisé en ce que** le système est mis en pression côté anode.

10. Procédé selon la revendication 1 ou 2, **caractérisé en ce que** de l'eau (H₂O) est obtenue à partir de la pile à combustible haute température (3) côté anode et/ou de la pile à combustible basse température (4, 101) côté cathode et évacuée.

11. Procédé selon la revendication 1, 2 ou 10, **caractérisé en ce que** l'eau obtenue de la pile à combustible basse température (4, 101) est traitée en totalité ou en partie pour être utilisée comme eau potable (17, 19, 21), et **en ce que** l'eau obtenue de la pile à combustible haute température (3) est utilisée comme eau sanitaire (chasse de WC) (18, 20).

12. Procédé selon la revendication 1, 2 ou 10, **caractérisé en ce que** l'eau obtenue de la pile à combustible basse température (4, 101) est utilisée en totalité ou en partie pour l'humidification de l'air dans un climatiseur (21).

13. Procédé selon la revendication 1, 2 ou 10, **caractérisé en ce que** l'eau produite à partir des piles à combustible haute température et basse température (3, 4, 101) est stockée dans des réservoirs intermédiaires séparés.

14. Procédé selon la revendication 1, 2, 10 ou 13, **caractérisé en ce que** le niveau de remplissage de l'eau contenue dans les réservoirs intermédiaires est détecté par une unité de commande.

15. Procédé selon la revendication 1, 10 ou 11, **caractérisé en ce que** les eaux grises produites (23) sont recyclées pour être utilisées dans le processus de reformage (3, 11) et **en ce que** les quantités d'eau excédentaires sont drainées (24).

16. Procédé selon la revendication 1 ou 11, **caractérisé en ce que** les eaux noires produites (22, 23) sont partiellement déshydratées et purifiées, **en ce que** l'eau ainsi obtenue est amenée au processus de reformage (3, 11) où de l'hydrogène est produit, et **en ce que** les quantités d'eau excédentaires sont drainées (24).
